# EUROPÄISCHE PATENTANMELDUNG

(11) **EP 1 080 637 A1**
(43) Veröffentlichungstag der Anmeldung: **07.03.2001**
(21) Anmeldenummer: 00116079.5
(22) Anmeldetag: 27.07.2000
(51) Int. Cl.: A01K 39/014, A01K 31/14

(54) **Vogelfutterhaus**

(30) Priorität: 31.08.1999 DE 29915244 U
(71) Anmelder: Lorenz Heckelmann & Söhne, 97705 Burkardroth-Waldfenster (DE)
(72) Erfinder: Frühmorgen, Günther, 82541 Ammerland (DE)
(74) Vertreter: Schlagwein, Udo, Dipl.-Ing.

(57) **Zusammenfassung**

Ein Vogelfutterhaus hat einen festen Boden (1) und ein darüber angeordnetes, den Boden (1) zumindest teilweise abdeckendes Dach (3). Dieses besteht aus einem biegsamen Material und ist an zwei gegenüberliegenden Rändern des Bodens (1) mit diesem lösbar verbunden, indem Vorsprünge (4) horizontal durch die unteren Ränder des Daches (3) in den Boden (1) führen. Zusätzlich kann das Dach (3) am oberen Ende eines Pfahls (2) befestigt sein, an welchem auch der Boden (1) befestigt ist.

## Beschreibung

Die Erfindung betrifft ein Vogelfutterhaus mit einem festen Boden und einem darüber angeordneten, den Boden zumindest teilweise abdeckenden Dach.

Vogelfutterhäuser der vorstehenden Art sind allgemein bekannt und gebräuchlich. Sie werden insbesondere in der Nähe von Wohnungen aufgestellt, um im Winter den Vögeln Futter bereitzustellen und um gleichzeitig Vögel beobachten zu können. Üblicherweise ist das Dach solcher Vogelfutterhäuser ähnlich wie bei einem Haus als Satteldach ausgebildet und besteht aus einem steifen Material. Diese Ausbildung des Daches bedingt beträchtliche Kosten und hat den Nachteil, dass die Reinigung des unter dem Dach liegenden Bereiches des Vogelfutterhauses erschwert wird. Gerade der Bereich, in welchem das Vogelfutter bereitgehalten wird, sollte jedoch möglichst oft gründlich gereinigt werden, um Infektionskrankheiten bei den Vögeln vorzubeugen.

Durch das deutsche Geschmacksmuster M 95 05 257.7 ist auch schon ein Vogelfutterhaus bekannt geworden, bei welchem der Boden auf einen Pfahl aufgeschoben ist und das Dach aus einer ebenfalls auf den Pfahl aufgeschobenen Holzscheibe besteht, welche durch einen quer verlaufenden Stab auf Abstand zu dem Boden gehalten wird. Dadurch kann man das Dach leicht vom Pfahl entfernen und anschließend den Boden gut reinigen. Nachteilig bei einem solchen Dach ist jedoch, dass es kaum Schutz bei schräg einfallendem Regen bietet und relativ teuer in seiner Herstellung ist.

Der Erfindung liegt das Problem zugrunde, ein Vogelfutterhaus der eingangs genannten Art so zu gestalten, dass es möglichst kostengünstig herstellbar ist und dessen Dach leicht vom Boden demontiert werden kann.

Dieses Problem wird erfindungsgemäß dadurch gelöst, dass das Dach aus einem biegsamen Material besteht und an zwei gegenüberliegenden Rändern des Bodens mit diesem lösbar verbunden ist.

Durch diese Gestaltung ist das Vogelfutterhaus äußerst kostengünstig herzustellen, weil sein Dach aus einem dünnen Kunststoffmaterial bestehen kann. Die lösbare Verbindung des Daches mit dem Boden bedingt ebenfalls nur sehr geringen Aufwand und kann so gestaltet sein, dass man das Dach einfach und rasch entfernen kann. Das ermöglicht eine gründliche Reinigung des gesamten Vogelfutterhauses nach Entfernen des Daches.

Die Verbindung des Daches mit dem Boden ist besonders einfach gestaltet, wenn gemäß einer Weiterbildung der Erfindung das Dach an zwei gegenüberliegenden Seiten jeweils zumindest eine Durchbrechung hat, durch die jeweils ein nach außen gerichteter Vorsprung des Bodens greift.

Das Dach kann ein selbsttragendes Gewölbe bilden und sich von einer Seite des Bodens zur anderen gänzlich ohne jede Abstützung spannen, wenn das Material des Daches durch eine ausreichende Steifigkeit nach seiner Befestigung am Boden selbsttragend ist.

Das Dach verträgt auch hohe Windkräfte, ohne sich unerwünscht stark zu verformen, wenn der Boden einen Durchlass hat, durch den ein das Vogelfutterhaus tragender Pfahl geführt ist, und wenn der über den Boden ragende Bereich des Pfahles in eine mittige Öffnung des Daches eingreift.

Statt das Dach aus einem relativ steifen Material zu fertigen und dadurch selbsttragend auszubilden, kann man gemäß einer anderen Weiterbildung der Erfindung auch vorsehen, dass nahe des oberen Endes des aus dem Boden ragenden Bereichs des Pfahles unterhalb des Daches ein horizontal ausgerichteter Stab durch den Pfahl hindurchgeführt ist, welcher eine Firstabstützung für das Dach bildet. Bei einer solchen Ausführungsform kann man das Dach beispielsweise aus einer Stoffplane fertigen.

Den Bedürfnissen von Vögeln optimal angepasst ist das Vogelfutterhaus, wenn die das Dach haltenden, nach außen gerichteten Vorsprünge des Bodens das Dach nach außen überragen und jeweils eine Sitzstange für einen Vogel bilden.

Das Vogelfutterhaus sieht besonders gefällig aus und kann gut von einem einzigen Pfahl gehalten werden, wenn der Boden kreisförmig ausgebildet ist und das Dach im nicht montierten, flachen Zustand die Form einer Kreisscheibe hat. Natürlich kann der Boden auch die Form eines Vierecks oder Sechsecks haben.

Das Dach des Vogelfutterhauses kann in Verbindung mit dem Pfahl eine Sonnenuhr bilden, wenn das von dem Pfahl durchdrungene Dach zum Auflegen auf den Erdboden ausgebildet ist und auf seiner Oberseite eine Sonnenuhrskala aufweist, über die der Schatten des Pfahles zu streichen vermag.

Der Boden des Vogelfutterhauses kann bei demontiertem Dach als Vogeltränke verwendet werden, wenn gemäß einer anderen Weiterbildung der Erfindung der Boden einen außenseitigen, nach oben hochgezogenen, umlaufenden Rand hat.

Das Dach erhält eine hohe Festigkeit und hat ein besonders vorteilhaftes Aussehen, wenn gemäß einer anderen Weiterbildung der Erfindung das Dach aus zwei Dachhälften besteht, die jeweils an zwei gegenüberliegenden Rändern des Bodens und am oberen Ende des Pfahls befestigt sind.

Die Befestigung der Dachhälften am oberen Ende des Pfahls kann auf sehr einfache Weise dadurch erfolgen, dass die Dachhälften in einem vertikalen Schlitz des Pfahls eingeschoben sind.

Ein unbeabsichtigtes Freikommen der Dachhälften von dem Pfahl lässt sich dadurch verhindern, dass ein Querstift im Bereich des Schlitzes durch den Pfahl und die in den Schlitz eingeführten Enden der Dachhälften führt.

Die beiden Dachhälften können aus einem einzigen Bauteil gebildet werden, indem sie durch Knicken eines Daches um eine Symmetrieachse erzeugt werden.

Die Erfindung lässt verschiedene Ausführungsformen zu. Zwei davon sind schematisch in der Zeichnung dargestellt und werden nachfolgend beschrieben. Diese zeigt in
- Fig.1: eine Seitenansicht eines Vogelfutterhauses nach der Erfindung,
- Fig.2: eine perspektivische Ansicht des Vogelfutterhauses,
- Fig.3: einen senkrechten Schnitt durch das Vogelfutterhaus, Fig.4 einen senkrechten Schnitt durch eine zweite Ausführungsform des Vogelfutterhauses.

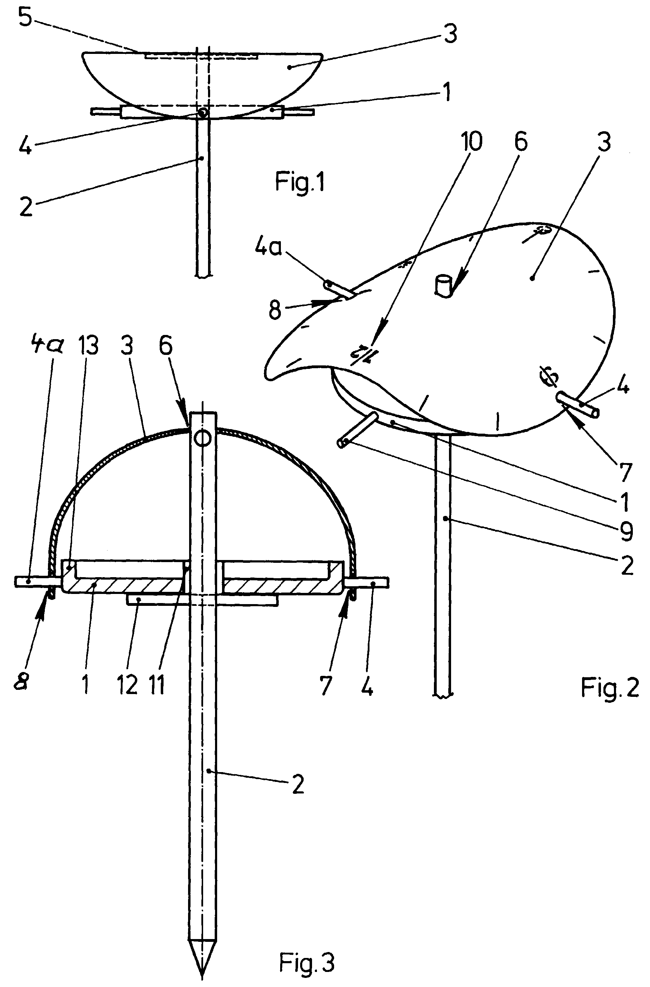

Wie die Figur 1 zeigt, hat das erfindungsgemäße Vogelfutterhaus einen Boden 1, der von oben her auf einen im Erdboden zu fixierenden Pfahl 2 aufgeschoben und befestigt ist. Über den Boden 1 wölbt sich ein diesen teilweise oder vollständig abdeckendes Dach 3, welches an zwei gegenüberliegenden Seiten des Bodens 1 jeweils mittels eines das Dach 3 durchdringenden Vorsprungs 4 lösbar fixiert ist. Unterhalb des Daches 3 verläuft ein den Pfahl 2 durchdringender, gestrichelt dargestellter Stab 5, der eine Firststange für das Dach 3 bildet. Wenn man das Dach 3 aus einem ausreichend steifen Material fertigt, kann man auf diesen Stab 5 verzichten und das Dach 3 selbsttragend ausbilden.

Die perspektivische Darstellung gemäß Figur 2 zeigt, dass das Dach 3 eine mittige Öffnung 6 hat, durch die das obere Ende des Pfahles 2 greift. Weiterhin hat das Dach 3 nahe seines Randes an zwei gegenüberliegenden Seiten jeweils eine Durchbrechung 7, 8. Durch die Durchbrechung 7 führt der Vorsprung 4, während durch die Durchbrechung 8 ein entsprechender Vorsprung 4a greift. Beide Vorsprünge 4, 4a sind so lang ausgebildet, dass sie zugleich als Sitzstange für einen Vogel dienen können. Wie die Figur 2 ebenfalls zeigt, können am Boden 1 weitere Sitzstangen 9 befestigt sein. Die Figur 2 zeigt weiterhin, dass das Dach 3 auf seiner Oberseite eine Sonnenuhrskala 10 aufweist. Baut man das Dach 3 vom Boden 1 ab und schiebt es auf dem Pfahl 2 bis auf den Boden, dann bildet der Schatten des Pfahles 2 einen Zeiger einer Sonnenuhr.

Die Figur 3 verdeutlicht, dass der Boden 1 einen mittigen Durchlass 11 hat, durch den der Pfahl 2 hindurchführt. Unterhalb des Bodens 1 ist ein Stab 12 durch den Pfahl 2 gesteckt, so dass der Boden 1 von oben her auf diesem Stab 12 auf zuliegen vermag. Der Boden 1 hat außenseitig einen hochgezogenen, umlaufenden Rand 13. Dadurch kann man den Boden 1 als Vogeltränke benutzen, beispielsweise im Sommer, wenn keine Notwendigkeit des Fütterns der Vögel besteht.

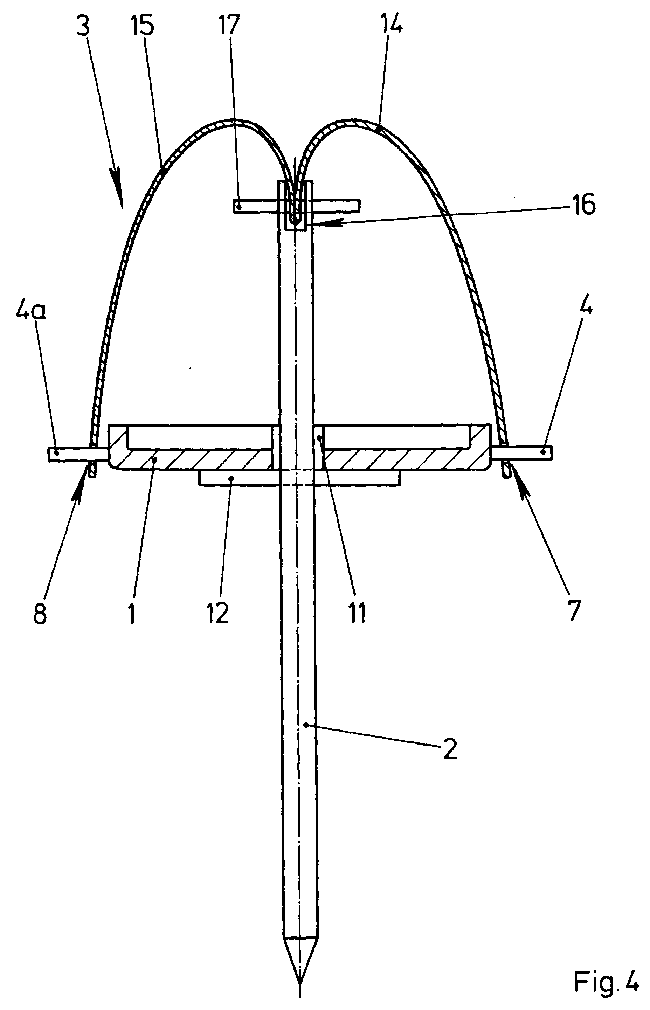

Bei der Ausführungsform nach Figur 4 ist das Dach 3 aus zwei flexiblen Dachhälften 14, 15 gebildet, welche durch Knicken des Daches 3 um eine Symmetrieachse erzeugt wurden. Der Pfahl 2 hat in seinem oberen Ende einen von oben her in ihn hineinführenden Schlitz 16, in welchem die beiden Dachhälften 14, 15 mit einem Rand eingeschoben sind. Zur zusätzlichen Fixierung führt ein Querstift 17 im Bereich des Schlitzes 16 durch den Pfahl 2 und die Enden der Dachhälften 14, 15. Im übrigen sind die Dachhälften genau wie bei der zuvor beschriebenen Ausführungsform am Boden 1 befestigt.

### Bezugszeichenliste

- 1: Boden
- 2: Pfahl
- 3: Dach
- 4: Vorsprung
- 5: Stab
- 6: Öffnung
- 7: Durchbrechung
- 8: Durchbrechung
- 9: Sitzstange
- 10: Sonnenuhrskala
- 11: Durchlass
- 12: Stab
- 13: Rand
- 14: Dachhälfte
- 15: Dachhälfte
- 16: Schlitz
- 17: Querstift

## Patentansprüche

1. Vogelfutterhaus mit einem festen Boden (1) und einem darüber angeordneten, den Boden (1) zumindest teilweise abdeckenden Dach (3), **dadurch gekennzeichnet**, dass das Dach (3) aus einem biegsamen Material besteht und an zwei gegenüberliegenden Rändern des Bodens (1) mit diesem lösbar verbunden ist.

2. Vogelfutterhaus nach Anspruch 1, **dadurch gekennzeichnet**, dass das Dach (3) an zwei gegenüberliegenden Seiten jeweils zumindest eine Durchbrechung hat, durch die jeweils ein nach außen gerichteter Vorsprung (4) des Bodens (1) greift.

3. Vogelfutterhaus nach den Ansprüchen 1 oder 2, **dadurch gekennzeichnet**, dass das Material des Daches (3) durch eine ausreichende Steifigkeit nach seiner Befestigung am Boden (1) selbsttragend ist.

4. Vogelfutterhaus nach zumindest einem der vorangehenden Ansprüche, **dadurch gekennzeichnet**, dass der Boden (1) einen Durchlass (11) hat, durch den ein das Vogelfutterhaus tragender Pfahl (2) geführt ist, und dass der über den Boden ragende Bereich des Pfahles (2) in eine mittige Öffnung (6) des Daches (3) eingreift.

5. Vogelfutterhaus nach Anspruch 4, **dadurch gekennzeichnet**, dass nahe des oberen Endes des aus dem Boden (1) ragenden Bereichs des Pfahles (2) unterhalb des Daches (3) ein horizontal ausgerichteter Stab (5) durch den Pfahl (2) hindurchgeführt ist, welcher eine Firstabstützung für das Dach (3) bildet.

6. Vogelfutterhaus nach zumindest einem der vorangehenden Ansprüche, **dadurch gekennzeichnet**, dass die das Dach (3) haltenden, nach außen gerichteten Vorsprünge (4, 4a) des Bodens (1) das Dach (3) nach außen überragen und jeweils eine Sitzstange für einen Vogel bilden.

7. Vogelfutterhaus nach zumindest einem der vorangehenden Ansprüche, **dadurch gekennzeichnet**, dass der Boden (1) kreisförmig ausgebildet ist und das Dach (3) im nicht montierten, flachen Zustand die Form einer Kreisscheibe hat.

8. Vogelfutterhaus nach Anspruch 7, **dadurch gekennzeichnet**, dass das von dem Pfahl (2) durchdrungene Dach (3) zum Auflegen auf den Erdboden ausgebildet ist und auf seiner Oberseite eine Sonnenuhrskala (10) aufweist, über die der Schatten des Pfahles (2) zu streichen vermag.

9. Vogelfutterhaus nach zumindest einem der vorangehenden Ansprüche, **dadurch gekennzeichnet**, dass der Boden (1) einen außenseitigen, nach oben hochgezogenen, umlaufenden Rand (13) hat und deshalb als Vogeltränke verwendbar ist.

10. Vogelfutterhaus nach zumindest einem der vorangehenden Ansprüche, **dadurch gekennzeichnet**, dass das Dach (3) aus zwei Dachhälften (14, 15) besteht, die jeweils an zwei gegenüberliegenden Rändern des Bodens (1) und am oberen Ende des Pfahls (2) befestigt sind.

11. Vogelfutterhaus nach Anspruch 10, **dadurch gekennzeichnet**, dass die Dachhälften (14, 15) in einem vertikalen Schlitz (16) des Pfahls (2) eingeschoben sind.

12. Vogelfutterhaus nach Anspruch 11, **dadurch gekennzeichnet**, dass ein Querstift (17) im Bereich des Schlitzes (16) durch den Pfahl (2) und die in den Schlitz (16) eingeführten Enden der Dachhälften (14, 15) führt.

13. Vogelfutterhaus nach zumindest einem der vorangehenden Ansprüche, **dadurch gekennzeichnet**, dass die Dachhälften (14, 15) durch Knicken eines Daches (3) um eine Symmetrieachse gebildet sind.
